(19) Europäisches Patentamt
European Patent Office
Office européen des brevets

(11) **EP 3 042 787 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(51) Int Cl.:
**B60C 9/00** (2006.01)      **D02G 3/48** (2006.01)
**D07B 1/06** (2006.01)      **B60C 9/20** (2006.01)

(21) Anmeldenummer: **15187009.4**

(22) Anmeldetag: **28.09.2015**

(54) **GÜRTELLAGE FÜR EINEN FAHRZEUGREIFEN**

BELT PLY FOR A VEHICLE TYRE

BANDAGE D'UN PNEU DE VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2014 DE 102014226119**

(43) Veröffentlichungstag der Anmeldung:
**13.07.2016 Patentblatt 2016/28**

(73) Patentinhaber: **Continental Reifen Deutschland GmbH**
**30165 Hannover (DE)**

(72) Erfinder: **Fries, Volkmar**
**30900 Wedemark (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A1- 0 849 098      DE-A1-102010 000 050**
**JP-B2- 3 498 274**

**Beschreibung**

Die Erfindung betrifft eine Gürtellage für einen Fahrzeugluftreifen, insbesondere für einen Nutzfahrzeugreifen, wobei die Gürtellage Stahlkorde der Konstruktion 1+N, mit N=4 oder N=5 mit einem einzigen Kernfilament und vier oder fünf Lagenfilament aufweist, wobei die Lagenfilamente sämtlich das Kernfilament außen berühren und gleiche Durchmesser aufweisen, wobei die Kordkonstruktion eine offene Kordkonstruktion ist und wobei das Verhältnis der Bruchenergie des Kernfilamentes zu der Bruchenergie eines Lagenfilament 1,1 bis 1,5 entspricht.

Ein Festigkeitsträger der Konstruktion 1+N, mit N=5-8 sowie ein Verhältnis der Bruchenergie des Kernfilamentes zu der Bruchenergie eines Lagenfilamentes von 1,07-1,20 ist aus der JP 3 498 274 B2 bekannt.

An die Gürtelkorde in den Gürtellagen von Fahrzeugluftreifen werden hohe Anforderungen gestellt, die in engem Zusammenhang mit bestimmten Eigenschaften der Gürtelkorde - der Stahlkorde in den Gürtellagen - stehen. Zu den Anforderungen an Gürtelkorde zählen eine ausreichend hohe Zug- und Biegesteifigkeit, eine hohe Festigkeit, gute Ermüdungsbeständigkeit, gute Korrosionsbeständigkeit, Stabilität gegen Verschiebung der einzelnen Kordbestandteile, eine gute Haftung zur umgebenden Gummimischung und moderate Herstellkosten. Zielkonflikte bestehen nun vor allem zwischen der Abrieblebensdauer, der Gürtelkantenhaltbarkeit, der Gürtelrobustheit und auch der Herstellkosten des Gürtelpakets aus einer Anzahl von Gürtellagen.

Die durch den Laufstreifenabrieb bestimmte Lebensdauer eines Fahrzeugluftreifens, die sogenannte Abrieblebensdauer, wird maßgeblich von den Gürtelkorden beeinflusst. So hat eine höhere Steifigkeit der Gürtellagen und damit auch des gesamten Gürtelpaketes eine höhere Abrieblebensdauer zur Folge. Die Abrieblebensdauer kann durch die Verwendung steiferer Stahlkorde in den Gürtellagen positiv beeinflusst werden. Für die Gürtelhaltbarkeit ist es vorteilhaft, Stahlkorde mit einem größeren Korddurchmesser zu wählen und mit einer niedrigeren Korddichte und damit einem größeren, lichten Kordabstand einzusetzen. Eine größere Festigkeit der Stahlkorde sowie ein eher geringer gegenseitiger Abstand der Stahlkorde in den Gürtellagen begünstigt die Robustheit des Gürtelpakets und schützt dieses vor äußeren Beschädigungen.

Ein möglichst kompakter Aufbau der Stahlkorde wiederum ist vorteilhaft für die Erzielung einer hohen Kordsteifigkeit in Relation zu den Kosten. Eine hohe Steifigkeit der Stahlkorde und größere Kordabstände verringern daher die Kosten. Stahlkordkonstruktionen mit höherem Korndurchmesser bei gleicher Steifigkeit erweisen sich bei gleichbleibender Korddichte in den Gürtellagen als nachteilig hinsichtlich der Gürtelhaltbarkeit und verursachen höhere Kosten wegen der größeren Dicke der Gürtellagen und des damit einhergehenden größeren Volumens der Gummierung.

Stahlkorde der eingangs genannten Art sind in unterschiedlichen Ausführungsformen aus dem Stand der Technik bekannt. So ist beispielsweise ein Nutzfahrzeugreifen bekannt, in dessen Gürtellagen ein Stahlkord der Konstruktion 1+6×0,34 enthalten ist. Die sechs Lagenfilamente sind vorverformt, sie würden ohne Vorverformung vollständig oder nahezu vollständig das Kernfilament umhüllen, sodass eine Penetration von Gummimaterial in die Filamentzwischenräume kaum mehr möglich wäre. Durch die Vorverformung der Lagenfilamente ist der Stahlkord insgesamt weniger kompakt und weist einen größeren Außendurchmesser auf, wodurch bei einer gewissen Korddichte die lichten Kordabstände verringert sind, was für die Gürtelhaltbarkeit von Nachteil ist. Diese bekannte Stahlkordkonstruktion erfordert eine gewisse Dicke der Gürtellagen und damit ein größeres Volumen an Gummierungsmischung, wodurch sich die Kosten erhöhen.

Aus der DE 30 06 488 A1 ist ein Stahlkord bekannt, welcher bei einer Verwendung in Gürtellagen von Fahrzeugluftreifen für Personenkraftwagen ein Kernfilament mit einem Durchmesser von 0,138 mm oder 0,15 mm und Lagenfilamente mit Durchmessern von 0,23 mm oder 0,25 mm aufweist. Für eine Verwendung dieses Stahlkordes in Gürtellagen von Nutzfahrzeugreifen soll der Durchmesser des Kernfilamentes zwischen 0,18 mm und 0,21 mm und jener der Lagenfilamente zwischen 0,30 mm und 0,35 mm betragen. Die Lagenfilamente sollen aus einem Kohlenstoffstahldraht mit einer Zugfestigkeit von mindestens 2250 bis 1130 log(d) N/mm$^2$ bestehen, wobei d der Drahtdurchmesser in Millimeter ist, das Kernfilament soll aus einem Kohlenstoffstahldraht mit einer Zugfestigkeit von weniger als 2250 bis 1130 log(d) N/mm$^2$ bestehen.

Eine weitere zweilagige Stahlkordkonstruktion ist aus der JP 60-038208 A bekannt. Offenbart ist eine 1+5-Kordkonstruktion mit einem maximalen Filamentdurchmesser von 0,342 mm. Um eine ausreichende Zugsteifigkeit der Gürtellagen, insbesondere in Nutzfahrzeugreifen, sicherzustellen, müssen diese Stahl korde mit einer relativ hohen Korddichte angeordnet werden, was jedoch, wie oben erwähnt, für die Gürtelkantenhaltbarkeit von Nachteil ist.

Aus der DE 10 2010 036 809 A ist ein Stahlkord der Konstruktion 1+N mit N > 3 bekannt, dessen Kernfilament einen Durchmesser von 0,30 mm bis 0,45 mm und dessen Lagenfilamente einen Durchmesser von 0,35 mm bis 0,50 mm aufweisen sollen. Das Verhältnis des Durchmessers des Kernfilamentes zum Durchmesser der Lagenfilamente soll zwischen 0,7 und 1,1 betragen, die Anzahl der Lagenfilamente soll insbesondere vier bis sechs betragen. Die aus diesem Stand der Technik bekannten Stahlkorde sind vor allem in Gürtellagen von Fahrzeugluftreifen vorteilhaft einsetzbar, die für höhere Lasten ausgelegt sind, also insbesondere LKW-Reifen und Busreifen.

Eine weitere Anforderung an die Gürtellagen von Nutzfahrzeugreifen ist, dass diese derart hinsichtlich der Gürtelkorde ausgelegt sind, dass eine ausreichende Festigkeit der Lauffläche gegen das Eindringen von Fremdkörpern erreicht wird. In einigen Staaten existieren von den zuständigen Behörden festgelegte Mindeststandards in definierten Prüfprozeduren bei denen die Energieaufnahme der Reifenstruktur vor einem Versagen bewertet wird (z.B. in den USA vom Department of Transportation). Der in den USA vorgeschriebene Test wird im Folgenden als "Plungertest" bezeichnet. Die bisher aus dem Stand der Technik bekannten Gürtellagen sind hinsichtlich des Bestehens des Plungertestes verbesserungsbedürftig. Der Plungertest, auch "Strength Test" genannt, wird nach FMVSS 119 durchgeführt. Für Light Truck Tires wird der Strength Test nach FMVSS 139 durchgeführt.

Der Erfindung liegt daher die Aufgabe zugrunde, eine Gürtellage mit Stahlkorden der eingangs genannten Art, welcher für einen Einsatz in Nutzfahrzeugreifen radialer Bauart, wie Transporterreifen oder Light-Truckreifen, LKW-Reifen und Busreifen, besonders gut geeignet ist, zur Verfügung zu stellen. Die Gürtellage soll hinsichtlich der oben erwähnten Zielkonflikte zwischen Abrieblebensdauer, Gürtelkantenhaltbarkeit, Gürtelrobustheit und Herstellkosten optimiert sein bzw. in der Lage stein, diese Zielkonflikt wesentlich besser zu lösen als die bekannten Konstruktionen. Zudem soll die Gürtellage durch den in dieser Gürtellage angeordneten Stahlkord den Plungertest wesentlich besser bestehen.

Gelöst wird die gestellte Aufgabe erfindungsgemäß dadurch, dass das Kernfilament und die Lagenfilamente gleiche Durchmesser aufweisen.

Bei einer erfindungsgemäß ausgeführten Gürtellage ist der Stahlkord offen konstruiert, mit einer Offenheit zwischen 10% und 20%. Das heißt, dass die Durchmesser des Kernfilamentes und der Lagenfilamente derart aufeinander abgestimmt sind, dass eine gute Penetration des Gummimaterials der Gürtelgummierung in die Zwischenräume zwischen den Lagenfilamenten gewährleistet ist. Somit ist das Kernfilament gut gegen Verschieben fixiert, ebenfalls ist die Korrosionsgefahr verringert. Dadurch, dass das Kernfilament eine höhere Bruchenergie als jedes der das Kernfilament umgebenden Lagenfilamente aufweist, ist das Ergebnis des Plungertestes positiv beeinflusst. Es wird vermutet, dass dieses positive Ergebnis durch die höhere Bruchenergie und der somit stärkeren Haltbarkeit des Kernfilamentes erzielt wird. Hierdurch wird das Kernfilament bei der Durchführung des Plungertestes nicht früher als die Lagenfilamente an seine Belastungsgrenze geführt und bricht somit nicht mehr als erstes Filament des Stahlkordes und initiiert nicht ein nachfolgendes Brechen der das Kernfilament umgebenden Lagenfilamente.

"Bruchfestigkeit" meint die maximale Kraft, die gemessen wird, wenn der Festigkeitsträger bis zum Bruch gedehnt wird.

"Bruchenergie" meint das Integral über die Kraft, die gemessen wird, wenn der Festigkeitsträger bis zum Bruch gedehnt wird.

Die Offenheit O der äußeren Filamente wird gemäß der Beziehung

$$O\ [\%] = N \times A_{NM} / \pi \times D_0$$

ermittelt, wobei $A_{NM}$ der arithmetische Mittelwert der kleinsten gegenseitigen Abstände der Lagenfilamente und Do der Durchmesser jenes Kreises ist, in welchem die kleinsten gegenseitigen Abstände zwischen den Lagenfilamenten Sehnen bilden. Der Durchmesser dieses Kreises wird gemäß der Beziehung

$$D_0 = (D_1 + D_2) \times \cos(360°/8)$$

ermittelt.

In der vorgenannten Ausführung entspricht das Verhältnis der Bruchenergie des inneren Filamentes zu der Bruchenergie eines Lagenfilament 1,10 bis 1,25.

Dabei ist es besonders vorteilhaft, wenn das Kernfilament aus Stahl der Festigkeitsträgerklasse ST oder UT besteht und wenn die Lagenfilamente aus Stahl der Festigkeitsklasse HT bestehen. Diese Kombination von Stahlfestigkeitsklassen hat sich als besonders geeignet für das gute Bestehen des Plungertests erwiesen.

Besonders vorteilhaft ist es, wenn der Stahlkord die Konstruktion 0,40 ST + 5 x 0,40 HT oder 0,40 UT + 5 x 0,40 HT aufweist.

Die Erfindung betrifft ebenfalls einen Fahrzeugluftreifen radialer Bauart mit einem mehrere Gürtellagen aufweisenden Gürtelverband, welcher zumindest eine Gürtellage gemäß einer vorgenannten Ausführung enthält.

Die in Bezug auf die Erfindung genannten Durchmesser der Stahlfilamente bestimmter Stahlfestigkeitsklassen weisen die in der nachfolgenden Tabelle aufgeführten Bruchfestigkeiten auf:

Tabelle

| Filamentdurchmesser / Stahlfestigkeitsklasse | Bruchfestigkeit [N/mm$^2$] |
|---|---|
| | |
| | |
| 0,40 / HT | 2975 +/- 5% |
| 0,40 / ST | 3300 +/- 5% |
| 0,40 / UT | 3600 +/- 5% |

Die Ermittlung der Bruchfestigkeit erfolgt nach einer dem Fachmann hinreichen bekannten Methode.

**Patentansprüche**

1. Gürtellage für einen Fahrzeugluftreifen, insbesondere für einen Nutzfahrzeugreifen, wobei die Gürtellage Stahlkorde der Konstruktion 1+N, mit N=4 oder N=5 mit einem einzigen Kernfilament und vier oder fünf Lagenfilament aufweist, wobei die Lagenfilamente sämtlich das Kernfilament (1) außen berühren und gleiche Durchmesser (D) aufweisen, wobei die Kordkonstruktion eine offene Kordkonstruktion ist und wobei das Verhältnis der Bruchenergie des Kernfilamentes (1) zu der Bruchenergie eines Lagenfilament (2) 1,1 bis 1,5 entspricht, **dadurch gekennzeichnet, dass** das Kernfilament (1) und die Lagenfilamente (2) gleiche Durchmesser aufweisen.

2. Gürtellage nach Anspruch 1, **dadurch gekennzeichnet, dass** das Verhältnis der Bruchenergie des Kernfilamentes (1) zu der Bruchenergie eines Lagenfilament (2) 1,10 bis 1,25 entspricht.

3. Gürtellage nach Anspruch 1 oder 2, **dadurch gekennzeichnet, dass** das Kernfilament (1) aus Stahl der Festigkeitsträgerklasse ST oder UT besteht und dass die Lagenfilamente (2) aus Stahl der Festigkeitsklasse HT bestehen.

4. Gürtellage nach Anspruch 3, **dadurch gekennzeichnet, dass** der Stahlkord die Konstruktion 0,40 ST + 5 x 0,40 HT oder 0,40 UT + 5 x 0,40 HT aufweist.

5. Fahrzeugluftreifen radialer Bauart mit einem mehrere Gürtellagen aufweisenden Gürtelverband, welcher zumindest eine Gürtellage gemäß einem oder mehreren der Ansprüche 1 bis 4 enthält.

**Claims**

1. Belt ply for a pneumatic vehicle tyre, in particular for a commercial vehicle tyre, the belt ply having steel cords of the construction 1+N, where N=4 or N=5 with a single core filament and four or five ply filaments, the ply filaments all externally contacting the core filament (1) and having the same diameter (D), the cord construction being an open cord construction and the ratio of the breaking energy of the core filament (1) to the breaking energy of a ply filament (2) corresponding to 1.1 to 1.5, **characterized in that** the core filament (1) and the ply filaments (2) have the same diameter.

2. Belt ply according to Claim 1, **characterized in that** the ratio of the breaking energy of the core filament (1) to the breaking energy of a ply filament (2) corresponds to 1.10 to 1.25.

3. Belt ply according to Claim 1 or 2, **characterized in that** the core filament (1) consists of steel of the reinforcing element class ST or UT and **in that** the ply filaments (2) consist of steel of the strength class HT.

4. Belt ply according to Claim 3, **characterized in that** the steel cord has the construction 0.40 ST + 5 $\times$ 0.40 HT or 0.40 UT + 5 $\times$ 0.40 HT.

5. Pneumatic vehicle tyre of a radial type of construction with a breaker belt assembly which comprises one or more belt plies and contains at least one belt ply according to one or more of Claims 1 to 4.

**Revendications**

1. Nappe d'armature pour un pneumatique de véhicule, en particulier pour un pneumatique de véhicule utilitaire, la nappe d'armature présentant des câbles d'acier de construction 1+N, avec N=4 ou N=5, avec un filament de noyau unique et quatre ou cinq filaments de nappe, les filaments de nappe étant tous en contact avec l'extérieur du filament de noyau (1) et présentant le même diamètre (D), la construction de câble étant une construction de câble ouverte et le rapport de l'énergie de rupture du filament de noyau (1) à l'énergie de rupture d'un filament de nappe (2) correspondant à 1,1 à 1,5, **caractérisée en ce que** le filament de noyau (1) et les filaments de nappe (2) présentent le même diamètre.

2. Nappe d'armature selon la revendication 1, **caractérisée en ce que** le rapport de l'énergie de rupture du filament de noyau (1) à l'énergie de rupture d'un filament de nappe (2) correspond à 1,10 à 1,25.

3. Nappe d'armature selon la revendication 1 ou 2, **caractérisée en ce que** le filament de noyau (1) se compose d'acier de classe de renforcement ST ou UT et **en ce que** les filaments de nappe (2) se composent d'acier de classe de résistance HT.

4. Nappe d'armature selon la revendication 3, **caractérisée en ce que** le câble d'acier présente la construction 0,40 ST + 5 x 0,40 HT ou 0,40 UT + 5 x 0,40 HT.

5. Pneumatique de véhicule de construction radiale comprenant une bande d'armature présentant plusieurs nappes d'armature, laquelle bande d'armature contient au moins une nappe d'armature selon l'une quelconque ou plusieurs des revendications 1 à 4.

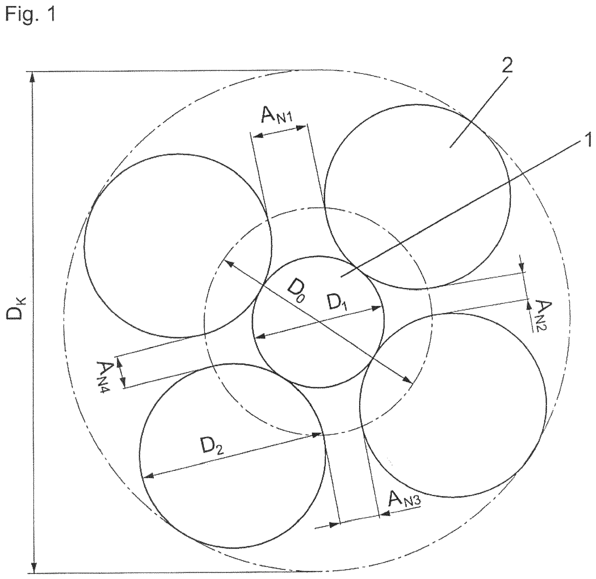

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 3498274 B
- DE 3006488 A1
- JP 60038208 A
- DE 102010036809 A